# EUROPÄISCHE PATENTANMELDUNG

(11) **EP 1 504 839 A2**
(43) Veröffentlichungstag der Anmeldung: **09.02.2005**
(21) Anmeldenummer: 04017719.8
(22) Anmeldetag: 27.07.2004
(51) Int. Cl.: B23F 21/12, B23F 15/06

(54) **Werkzeug zum spanabhebenden Herstellen der Planverzahnung eines Kronrades**

(30) Priorität: 05.08.2003 DE 10335756
(71) Anmelder: Kownatzki, Günter, 79713 Bad Säckingen (DE)
(72) Erfinder: Kownatzki, Günter, 79713 Bad Säckingen (DE)
(74) Vertreter: Patentanwälte Westphal, Mussgnug & Partner

(57) **Zusammenfassung**

Die Planverzahnung (16) eines Kronrades (10) für die Paarung mit einem zylindrischen stirnverzahnten Ritzel wird spanabhebend hergestellt. Hierzu dient ein Fräswerkzeug (12), welches um eine zur Drehachse (C-Achse) des Kronradwerkstückes (10) winklige Achse (B-Achse) drehangetrieben wird. Das Kronradwerkstück (10) und das Fräswerkzeug (12) werden in einer zu der Drehachse des Kronradwerkstückes (10) und zur Drehachse (B-Achse) des Fräswerkzeuges (12) senkrechten Richtung (X-Achse) gegeneinander bewegt. Das Fräswerkzeug (12) weist an seinem Umfang Schneiden (14) auf, deren Schneidprofil mit dem Profil eines Segmentes der Stirnverzahnung des Ritzels übereinstimmt. Die Schneidprofile der in Umfangsrichtung des Fräswerkzeuges (12) benachbarten Schneiden (14) entsprechen jeweils einem Segment des Ritzels, das um einen der Anzahl der Schneiden (14) entsprechenden Bruchteil der Zahnteilung des Ritzels versetzt ist. Dadurch kann die Planverzahnung (16) des Kronrades (10) durch Abwälzfräsen hergestellt werden.

## Beschreibung

### Beschreibung

Die Erfindung betrifft ein Werkzeug zum spanabhebenden Herstellen der Planverzahnung eines Kronrades für die Paarung mit einem zylindrischen stirnverzahnten Ritzel.

Zunehmend werden Getriebepaarungen gefordert, bei welchen ein zylindrisches stirnverzahntes Ritzel in einem planverzahnten Kronrad läuft. Gegenüber der herkömmlichen Paarung von Kegelrädern ist eine einfachere Montage möglich, da die Justierung in Bezug auf den radialen Abstand des Ritzels von der Kronradachse und in Bezug auf den Abstand der Ritzelachse von der Planverzahnungsebene größere Toleranzen zulässt.

Soweit solche Planverzahnungen bisher nicht durch Umformverfahren hergestellt werden, wird eine spanabhebende Bearbeitung durch radiales Stoßen eingesetzt. Diese spanabhebende Bearbeitung ist zeitaufwändig.

Zur Herstellung von stirnverzahnten Rädern ist das Abwälzfräsen bekannt. Hierbei wird als Fräswerkzeug ein Abwälzfräser verwendet, der aus einer durch Spannuten in Fräszähne unterteilten Schnecke besteht. Die Drehachse des Abwälzfräsers ist winklig zur Drehachse des Zahnradwerkstückes angeordnet. Der Schneidvorschub des Fräsers erfolgt parallel zur Drehachse des Zahnradwerkstückes. Beim Abwälzfräsen werden dabei das Zahnradwerkstück und der Abwälzfräser jeweils mit solchen Drehzahlen angetrieben, dass das Zahnradwerkstück genau eine Zahnteilung zurücklegt, wenn das Fräsergewinde um eine Steigung gedreht wird. Diese bekannten Abwälzfräser eignen sich ausschließlich zur Herstellung von Stirnverzahnungen und nicht zur Herstellung von Planverzahnungen.

Der Erfindung liegt die Aufgabe zugrunde, ein kostengünstigeres spanabhebendes Herstellen der Planverzahnung eines Kronrades für die Paarung mit einem zylindrischen stirnverzahnten Ritzel zu ermöglichen.

Diese Aufgabe wird erfindungsgemäß gelöst durch ein Werkzeug mit den Merkmalen des Anspruchs 1.

Vorteilhafte Ausführungen der Erfindung sind in den Unteransprüchen angegeben.

Die Erfindung ermöglicht es, eine Planverzahnung für die Paarung mit einem zylindrischen Ritzel in einem kostengünstigen Abwälzfräs-Verfahren herzustellen. Hierzu wird ein Fräswerkzeug verwendet, welches auf seiner Mantelfläche Schneiden aufweist, die jeweils einem Segment der Stirnverzahnung des Ritzels entsprechen, welches in der Planverzahnung des Kronrades laufen soll. Die in einer vorgegebenen Teilung in Umfangsrichtung aufeinander folgenden Schneiden des Fräswerkzeugs entsprechen dabei jeweils Segmenten der Verzahnung des Ritzels, die um einen der Anzahl der Schneiden entsprechenden Bruchteil in der Zahnteilung gegeneinander verdreht sind. Das Fräswerkzeug dreht sich um eine Achse, die zur Drehachse des Kronradwerkstücks im Winkel verläuft. Der Schneidvorschub des Fräswerkzeugs verläuft im Winkel sowohl zur Drehachse des Fräswerkzeugs als auch zur Drehachse des Kronradwerkstückes. Dadurch lässt sich die Planverzahnung unter Einsatz des erfindungsgemäßen Fräswerkzeugs auf einer herkömmlichen Verzahnungsmaschine fräsen. Verläuft die Vorschubrichtung des Fräswerkzeuges radial in Bezug auf die Drehachse des Kronradwerkstückes, so schneiden die Flankenlinien der Planverzahnung die Achse des Kronrades, sodass sich ein Kronradgetriebe mit sich schneidenden Achsen ergibt. Verläuft die Vorschubrichtung des Fräswerkzeugs außermittig zur Drehachse des Kronradwerkstückes, d. h. tangential zu einem konzentrisch zur Achse innerhalb der Verzahnung liegenden Kreis, so ergibt sich ein Kronradgetriebe mit gekreuzten Achsen. Es lassen sich somit erfindungsgemäß sowohl Geradzahn- als auch Schrägzahn-Planverzahnungen herstellen.

In einer vorteilhaften Ausführung besteht das Fräswerkzeug aus einem scheibenförmigen Grundkörper, in dessen Mantelfläche die Schneiden in der vorgegebenen Winkelteilung eingesetzt sind. Dadurch ist einfaches Auswechseln der Schneiden möglich. Auf diese Weise kann der Durchmesser des Fräswerkzeuges wesentlich größer gemacht werden als der Durchmesser des Ritzels. Dadurch können eine größere Schneidkraft und ein günstigerer Schneidwinkel realisiert werden. Insbesondere können in dieser Ausführung die der Verzahnung des Ritzels entsprechenden Schneidenformen günstig hergestellt werden.

Die Schneiden des Fräswerkzeuges stimmen mit einem Segment des Ritzels überein, welches wenigstens ein vollständiges Zahnprofil umfassen muss, damit das zu erzeugende Profil vollständig ausgefräst werden kann. Vorzugsweise umfasst das Segment einige wenige Zahnprofile, wobei die Zahl der Zahnprofile nach Durchmesser und Zähnezahl des Ritzels gewählt werden kann. In den meisten Anwendungsfällen ergeben sich bei Segmenten mit drei vollständigen Zahnprofilen günstige Schneideigenschaften des Fräswerkzeugs.

Im Folgenden wird die Erfindung anhand eines in der Zeichnung, dargestellten Ausführungsbeispieles näher erläutert. Es zeigen
- Fig. 1: schematisch die Arbeitsweise des erfindungsgemäßen Fräswerkzeuges
- Fig. 2: eine Axialansicht des Fräswerkzeuges und
- Fig. 3: einen Axialschnitt des Fräswerkzeugs.

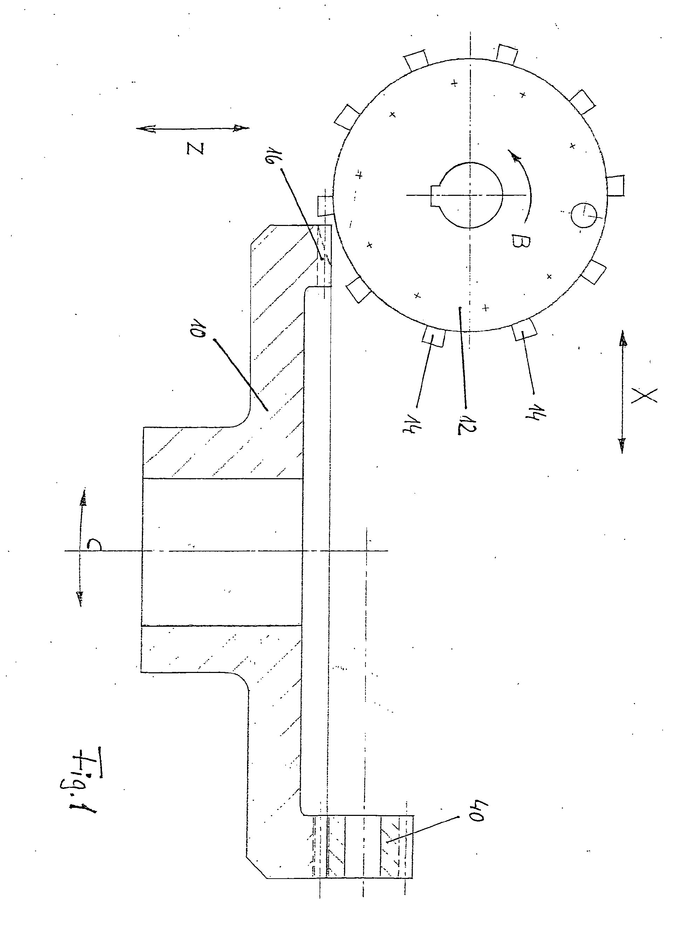

In Fig. 1 ist schematisch das Grundprinzip des erfindungsgemäßen Verfahrens dargestellt. In einer im Grundaufbau bekannten und daher im Einzelnen nicht dargestellten und beschriebenen Verzahnungsmaschine wird ein Kronradwerkstück 10 in einer Werkstückhalterung gespannt und um seine als C-Achse bezeichnete Rotationsachse drehend angetrieben. Ein Fräswerkzeug 12 ist in einem Werkzeugträger gespannt und wird um seine als B-Achse bezeichnete Rotationsachse drehend angetrieben. Das Fräswerkzeug 12 trägt an seinem Umfang in seiner Mantelfläche eingesetzte Schneiden 14. Die B-Achse des Fräswerkzeuges 12 verläuft zu der C-Achse des Kronradwerkstückes 10 winklig. Die B-Achse des Fräswerkzeuges 12 wird auf einen solchen axialen Abstand von dem Kronradwerkstück 10 eingestellt, dass seine Schneiden 14 in die Planfläche des Kronradwerkstücken 10 eintauchen, um die Planverzahnung 16 zu erzeugen. Der Fräsvorschub für die Erzeugung der Planverzahnung 16 erfolgt dadurch, dass das Kronradwerkstück 10 und das Fräswerkzeug 12 in der in der Zeichnung mit X-Achse bezeichneten Richtung gegeneinander bewegt werden. Die X-Achse verläuft dabei im Winkel zu der C-Achse, um welche das Kronradwerkstück 10 gedreht wird, als auch im Winkel zu der B-Achse, um welche das Fräswerkzeug 12 gedreht wird. Die Vorschubrichtung der X-Achse kann dabei die C-Achse schneiden, sodass eine Gerad-Planverzahnung erzeugt wird, oder kann die C-Achse außermittig kreuzen, sodass eine Schräg-Planverzahnung erzeugt wird.

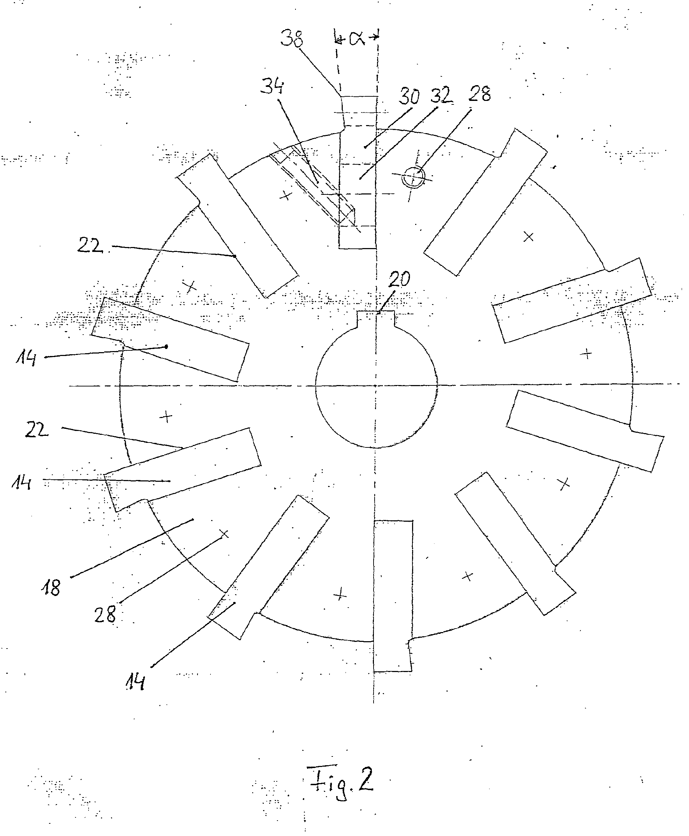

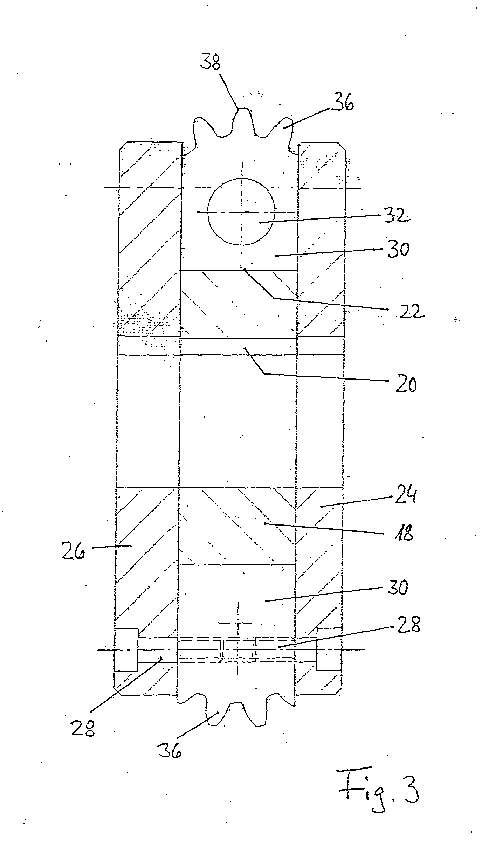

Das Fräswerkzeug 12 ist in den Figuren 2 und 3 im Einzelnen dargestellt.

Das Fräswerkzeug 12 weist einen kreisscheibenförmigen Grundkörper 18 auf, der mittels einer Keilverbindung 20 drehfest auf eine Antriebswelle gesetzt wird. In die äußere Mantelfläche des Grundkörpers 18 sind radiale Schlitze 22 eingearbeitet. Die Schlitze 22 sind in gleicher Winkelteilung über den Umfang des Grundkörpers 18 verteilt. In dem dargestellten Ausführungsbeispiel sind zehn Schlitze 22 mit einem Winkelabstand von 36° vorgesehen. In jeden Schlitz 22 wird jeweils eine Schneide 14 eingesetzt. Die beiden Planflächen des Grundkörpers 18 sind jeweils durch Deckplatten 24 und 26 abgedeckt. Die Deckplatten 24 und 26 werden mit dem Grundkörper 18 durch achsparallele Schrauben 28 verspannt, die jeweils im Winkel versetzt zwischen den Schlitzen 22 angeordnet sind. Die Deckplatten 24 und 26 schließen die Schlitze 22 an den axialen Planflächen des Grundkörpers 18 ab und stützen die Schneiden 14 seitlich ab.

Die Schneiden 14 bestehen aus einer Schneidplatte 30, die eine rechteckige Grundgestalt hat. Mit dieser rechteckigen Grundkontur wird die Schneidplatte 30 in den Schlitz 22 eingesetzt. In der Schneidplatte 30 ist ein vorzugsweise kreisrunder Durchbruch 32 ausgespart. Wie aus Fig. 2 ersichtlich ist, führt jeweils eine Gewindebohrung vom Außenumfang des Grundkörpers 18 unter einem Winkel in die Schlitze 22. In diese Gewindebohrung wird eine als Madenschraube ausgebildete Spannschraube 34 eingedreht. Die Spannschraube 34 greift mit ihrer Spitze in den Durchbruch 32 und presst dadurch die Schneidplatte 30 gegen den Grund des Schlitzes 22. Die Schneidplatte 30 wird auf diese Weise durch die Spannschraube 34 am Grund des Schlitzes 22 festgelegt, während die mittels der Schrauben 28 verspannten Deckplatten 24 und 26 die Schneidplatte 30 an ihren radialen Kanten spannen und fixieren. Nach einem Lockern der Deckplatten 24 sowie einem Herausdrehen der Spannschraube 34 kann die Schneidplatte 30 ausgewechselt werden.

An ihrer radialen Außenkante ragen die Schneidplatten 30 jeweils mit einem Schneidprofil 36 über die Mantelfläche des Grundkörpers 18 und der Deckplatten 24 und 26 hinaus. Wie Fig. 3 zeigt, weist das Schneidprofil 36 eine Profilform auf, die genau einem Segment des Zahnprofils des stirnverzahnten Ritzels 40 entspricht, welches mit der Planverzahnung 16 des Kronrades 10 gepaart wird. In dem dargestellten Ausführungsbeispiel stimmt das Schneidprofil 36 mit einem Segment der Verzahnung des Ritzels 40 überein, welches drei vollständige Zähne umfasst. Das Schneidprofil 36 kann auch mit einem Segment des Ritzels 40 übereinstimmen, welches eine andere Zahnzahl umfasst, wobei das Schneidprofil jedoch wenigstens einem vollständigen Zahnprofil entsprechen muss, damit ein vollständiges Zahnprofil ausgefräst und erzeugt werden kann.

Das Schneidprofil 36 der Schneiden 14 weist eine in Drehrichtung des Fräswerkzeuges 12 weisende Schneidkante 38 auf, die vorzugsweise mit einem Freiwinkel α ausgebildet ist.

Die Schneidprofile 36 der in die verschiedenen Schlitze 22 eingesetzten Schneiden 14 unterscheiden sich in der Weise, dass das Schneidprofil 36 jeder Schneide 14 jeweils einem Segment der Verzahnung des Ritzels entspricht, das gegenüber dem Segment der in Umfangsrichtung des Fräswerkzeuges 12 benachbarten Schneide um einen Winkel versetzt ist, der einem der Anzahl der Schneiden 14 entsprechenden Bruchteil der Zahnteilung des Ritzels entspricht. Sind in dem dargestellten Ausführungsbeispiel zehn Schneiden 14 vorgesehen, so stimmen die Schneidprofile 36 der jeweils benachbarten Schneiden 14 mit Segmenten der Verzahnung des Ritzels überein, die jeweils um 1/10 der Zahnteilung gegeneinander versetzt sind. Insgesamt ergibt sich somit über den Umfang des Fräswerkzeuges 12 ein Versatz der Schneidprofile 36 von insgesamt einer Zahnteilung des Ritzels. In Fig. 3 ist bspw. zu erkennen, dass das Schneidprofil 36 der oberen Schneide 14 gegenüber der diametral angeordneten unteren Schneide 14 um eine halbe Zahnteilung versetzt ist.

Der Antrieb des Kronradwerkstückes 10 und der Antrieb des Fräswerkzeuges 12 erfolgen mit jeweils solchen Drehzahlen, dass das Kronradwerkstück 10 um eine Zahnteilung seiner Planverzahnung 16 gedreht wird, während das Fräswerkzeug 12 eine Umdrehung ausführt. Dadurch wird mittels des Fräswerkzeuges 12 ein Abwälzfräsen der Planverzahnung 16 bewirkt.

Es ist ohne Weiteres einzusehen, dass das Fräswerkzeug 12 nicht nur einen Satz von Schneiden 14 tragen kann, die einer Zahnteilung des Ritzels entsprechen, sondern dass in Umfangsrichtung aufeinander folgend auch zwei oder mehr Sätze von Schneiden 14 angeordnet werden können, wobei jeder Satz jeweils Schneidprofile 36 aufweist, die sich zu einer Zahnteilung des Ritzels ergänzen. Dabei muss die Drehzahl des Fräswerkzeuges 12 entsprechend der Anzahl der Sätze von Schneiden 14 so modifiziert werden, dass sich das Konradswerkstück 10 um eine Zahnteilung dreht, während sich das Fräswerkzeug 12 um einen einem Satz von Schneiden 14 entsprechenden Winkel dreht.

Im dargestellten Ausführungsbeispiel entspricht das Zahnprofil einer Evolventen-Verzahnung. Vorzugsweise entspricht dabei das Schneidprofil 36 dem Zahnprofil im Teilkreis der Planverzahnung 16.

### Bezugszeichenliste

- 10: Kronradwerkstück
- 12: Fräswerkzeug
- 14: Schneiden
- 16: Planverzahnung
- 18: Grundkörper
- 20: Keilverbindung
- 22: Schlitze
- 24: Deckplatte
- 26: Deckplatte
- 28: Schrauben
- 30: Schneidplatte
- 32: Durchbruch
- 34: Spannschraube
- 36: Schneidprofil
- 38: Schneidkante
- 40: Ritzel

- X: Vorschubachse
- B: Fräsachse
- C: Kronradachse
- α: Freiwinkel

## Patentansprüche

1. Werkzeug zum spanabhebenden Herstellen der Planverzahnung eines Kronrades für die Paarung mit einem zylindrischen stirnverzahnten Ritzel,
**dadurch gekennzeichnet, dass** das Werkzeug als Fräswerkzeug (12) ausgebildet ist, dass das Fräswerkzeug (12) auf seiner Mantelfläche wenigstens einen Satz von in einer vorgegebenen Teilung angeordneten Schneiden (14) aufweist, dass das Schneidprofil (36) der Schneiden (14) mit dem Profil eines Segmentes der Stirnverzahnung des Ritzels übereinstimmt, dass die Schneidprofile (36) der in Umfangsrichtung des Fräswerkzeuges (12) benachbarten Schneiden (14) jeweils einem Segment des Ritzels entsprechen, das um einen der Anzahl der Schneiden (14) eines Satzes entsprechenden Bruchteil der Zahnteilung des Ritzels versetzt ist.

2. Werkzeug nach Anspruch 1,
**dadurch gekennzeichnet, dass** auf der Mantelfläche des Fräswerkzeuges (12) ein Satz von Schneiden (14) angeordnet ist.

3. Werkzeug nach Anspruch 1 oder 2,
**dadurch gekennzeichnet, dass** die Schneidprofile (36) der Schneiden (14) mit dem Profil eines Segmentes der Stirnverzahnung des Ritzels übereinstimmen, welches wenigstens einen vollständigen Zahn aufweist.

4. Werkzeug nach Anspruch 3,
**dadurch gekennzeichnet, dass** die Schneidprofile (36) einem Segment der Stirnverzahnung des Ritzels mit drei vollständigen Zähnen entsprechen.

5. Werkzeug nach einem der Ansprüche 1 bis 4,
**dadurch gekennzeichnet, dass** das Fräswerkzeug (12) einen kreisscheibenförmigen Grundkörper (18) aufweist und dass die Schneiden (14) auswechselbar in die Mantelfläche des Grundkörpers (18) eingesetzt sind.

6. Werkzeug nach Anspruch 5,
**dadurch gekennzeichnet, dass** der Grundkörper (18) in seiner Mantelfläche Schlitze (22) aufweist, die radial in einer die Drehachse (Y-Achse) einschließenden Ebene verlaufen, und dass die Schneiden (14) aus einer Schneidplatte (30) bestehen, die jeweils in einen Schlitz (22) einsetzbar und in diesem fixierbar ist und mit dem Schneidprofil (36) über den Umfang des Grundkörpers (18) hinausragt.

7. Werkzeug nach Anspruch 6,
**dadurch gekennzeichnet, dass** die Schlitze (22) sich über die gesamte axiale Breite des Grundkörpers (18) erstrecken und an den beiden Planflächen des Grundkörpers (18) durch Deckplatten (24, 26) abgeschlossen sind.

8. Werkzeug nach Anspruch 6 oder 7,
**dadurch gekennzeichnet, dass** die Schneidplatten (30) durch eine vom Umfang in den Grundkörper eindrehbare Spannschraube (34) in dem Schlitz (22) fixierbar sind.

9. Werkzeug nach einem der Ansprüche 1 bis 8,
**dadurch gekennzeichnet, dass** die Schneidkante (38) der Schneidprofile (36) einen Freiwinkel (α) aufweist.
